# EUROPÄISCHE PATENTSCHRIFT

(11) **EP 1 704 072 B1**
(45) Veröffentlichungstag und Bekanntmachung des Hinweises auf die Patenterteilung: **09.01.2008**
(21) Anmeldenummer: 04786776.7
(22) Anmeldetag: 15.09.2004
(51) Int. Cl.: B60Q 1/14, B60Q 1/08, B60Q 1/02

(54) **VERFAHREN UND VORRICHTUNG ZUR STEUERUNG EINER STRAHLUNGSQUELLE**
METHOD AND DEVICE FOR CONTROLLING A RADIATION SOURCE
PROCEDE ET DISPOSITIF DE COMMANDE D'UNE SOURCE DE RAYONNEMENT

(30) Priorität: 19.09.2003 DE 10343479
(43) Veröffentlichungstag der Anmeldung: 27.09.2006
(73) Patentinhaber: ROBERT BOSCH GMBH, 70442 Stuttgart (DE)
(72) Erfinder: KRAFT, Dieter, 70839 Gerlingen (DE)
(86) Internationale Anmeldenummer: PCT/DE2004/002056
(87) Internationale Veröffentlichungsnummer: WO 2005/028249

(56) Entgegenhaltungen:
- EP-A- 1 281 571
- DE-A1- 3 101 855
- US-A- 5 796 094
- US-B1- 6 179 080
- US-B1- 6 396 397

## Beschreibung

### Stand der Technik

Die Erfindung betrifft ein Verfahren und eine Vorrichtung zur Steuerung einer Strahlungsquelle insbesondere eine Lichtquelle vorzugsweise in einem Kraftfahrzeug, sowie deren Verwendung in einem System, insbesondere einem Nachtsichtsystem in einem Kraftfahrzeug.

Aus der deutschen Offenlegungsschrift DE 40 32 927 A1 ist eine Vorrichtung zur Verbesserung der Sichtverhältnisse in einem Kraftfahrzeug beschrieben. Dabei wird das mit einer infrarotempfindlichen Kamera erfasste Bild mit einer als Head-up-Display ausgebildeten Anzeigevorrichtung als virtuelles Bild der äußeren Landschaft visuell überlagert und dem Fahrer angezeigt. Ferner ist zur Bestrahlung des von dem Fahrer erfassten Sichtbereiches in Fahrrichtung wenigstens eine Strahlungsquelle mit einem Infrarotstrahlungsanteil vorgesehen.

Derartige Nachtsichtsysteme (Night-View-Systeme, NV-Systeme), wie sie in der DE 40 32 927 A1 beschrieben sind, auf der Basis von Licht mit Wellenlängen im nahen infraroten Wellenlängenbereich (near-infrared, NIR) beleuchten die Szene vor einem Kraftfahrzeug mittels Infrarotscheinwerfern (Near-Infrared-Scheinwerfer, NIR-Scheinwerfer) im allgemeinen mit Fernlichtcharakteristik. Unter bestimmten Bedingungen kann durch die für Menschen und die meisten Tiere nicht-sichtbare NIR-Strahlung eine Beeinträchtigung der Augen von Menschen und Tieren entstehen, die sich im Wirkungsbereich eines solchen NIR-Scheinwerfers aufhalten. Zur Vermeidung einer solchen Beeinträchtigung ist es denkbar, Mindestabstände für bestimmte Bestrahlungsstärken zwischen NIR-Scheinwerfern und Auge abzuleiten, die nicht unterschritten werden sollten, und beispielsweise durch konstruktive Maßnahmen gewährleistet werden.

Neben konstruktiven Maßnahmen ist aus der deutschen Offenlegungsschrift DE 101 26 492 A1 ein alternatives Verfahren bekannt, um eine Beeinträchtigung von Verkehrsteilnehmern durch NIR-Licht zu gewährleisten. Es wird ein Verfahren vorgeschlagen bei dem Laserlicht mit einer Wellenlänge außerhalb des sichtbaren Spektrums nur dann abgestrahlt wird, wenn sich das Kraftfahrzeug in Fahrt befindet. Ferner ist bekannt, NIR-Scheinwerfer erst ab einer gewissen Mindestgeschwindigkeit, beispielsweise 30 km/h, zu aktivieren. Nachteilig an diesen Verfahren ist, dass die Nachtsichtfunktion eines Nachtsichtsystems bei stehendem Kraftfahrzeug und/oder langsamer Fahrt nicht verfügbar ist, obgleich auch hier Situationen vorliegen können, bei der die Nachtsichtfunktion nützlich ist. Beispielsweise wäre eine Nachtsichtfunktion bei langsamer Fahrt auf feldwegartigen Straßen oder engen Nebenstraßen nützlich. Ferner wird durch das häufige Ein- und Ausschalten der NIR-Scheinwerfer deren Lebensdauer beeinträchtigt. Insbesondere bei einer Stop-and-go-Situation und/oder Fahrsituationen in der Nähe der Mindestgeschwindigkeit werden die NIR-Scheinwerfer strapaziert. Dies kann dazu führen, dass die Akzeptanz eines derartigen Nachtsichtsystems beim Nutzer durch diese eingeschränkte Verfügbarkeit reduziert wird.

Die US-A-6179080 zeigt ein Verfahren und eine Vorrichtung zur Steuerung einer Strahlungsquelle, wobei wenigstens ein Sensor einen Teil des Beleuchtungsbereichs der Strahlungsquelle auf die Anwesenheit eines Objektes überwacht und in Abhängigkeit davon Sensorsignale erzeugt, die zur Abschaltung der Strahlungsquelle dienen.

Entsprechendes ist aus der US-A-6396397 der US-A-5796094 oder der DE-A-3101855 bekannt.

Die EP 1281571 A zeigt ein Nachtsichtsystem.

### Vorteile der Erfindung

Durch das Abschalten der Strahlungsquelle bzw. Abschwächen ihrer Intensität bei Annäherung an ein Objekt wird einer Gefährdung von Personen durch Strahlungsquellen im nicht sichtbaren Wellenlängenbereich wirksam begegnet.

Besonders vorteilhaft ist, dass mittels abstandmessender Sensoren, die bereits heute in Fahrzeugen zumindest zum Teil verfügbar sind, die Annäherung an ein Objekt zuverlässig erkannt werden kann und die Strahlungsquelle abgeschaltet bzw. ihre Intensität abgeschwächt oder abstandsgeregelt abgesenkt wird.

Insgesamt ergibt sich so eine beeinträchtigungsfreie und gleichzeitig mit hoher Verfügbarkeit arbeitende Vorgehensweise zur Verbesserung der Sicht in einem Kraftfahrzeug. In besonders vorteilhafter Weise trägt das Verfahren dazu bei, dass eine

Beeinträchtigung, insbesondere eine Augenbeeinträchtigung, von Menschen, wie Fußgängern und/oder Radfahrern und/oder Kraftfahrern, und/oder von Tieren, durch die nicht sichtbare Strahlung außerhalb des sichtbaren Spektrums vermindert wird.

Besonders vorteilhaft ist die Verwendung der nachfolgend beschriebenen Vorgehensweise in Nachtsichtsystemen in Kraftfahrzeugen, bei denen ein zumindest im sichtbaren Spektralbereich empfindlicher, insbesondere im nahen infraroten Spektralbereich empfindlicher, Videosensor die Umgebung des Kraftfahrzeuges aufnimmt und diese Informationen dem Fahrer angezeigt werden. Durch das nachfolgend beschriebene Verfahren wird das Nachtsichtsystem nur dann deaktiviert, wenn die Sensoren Objekte detektieren und/oder diese in einem Mindestabstand zur Strahlungsquelle sich befinden. Dies trägt in besonders vorteilhafter Weise dazu bei, dass die Lebensdauer und Verfügbarkeit der verwendeten Strahlungsquelle n, insbesondere der zumindest im nahen infraroten Wellenlängenbereich leuchtende Scheinwerfer (NIR-Scheinwerfer), hoch ist.

Besonders vorteilhaft ist, dass wenigstens ein Nahbereichssensors (z.B. ein Ultraschallsensor) vorzugsweise eines bereits im Fahrzeug verbauten Systems (z.B. einer Einparkhilfe) und/oder wenigstens ein Radarsensor zur Abstandsmessung verwendet wird. Die Nutzung solcher im Kraftfahrzeug für andere Funktionen bereits eingesetzten Sensoren ziehen nur geringe Zusatzkosten nach sich, da keine zusätzlichen Bauteile (Hardware) erforderlich sind.

Vorteilhaft ist die abstandgeregelte (Abstand zum Objekt) Einstellung der Intensität der Strahlungsquelle. Vorteilhaft ist dabei eine proportionale Einstellung zum Abstand. Ferner ist unterhalb eine Mindestabstand (z.B. 20 cm) eine vollständige Abschaltung der Strahlungsquelle vorteilhaft.

Besonders vorteilhaft ist eine Warnung des Fahrers und/oder des wenigstens einen anwesenden Objektes durch ein akustisches und/oder optisches Warnsignal, falls eine Annäherung an ein Objekt erkannt wird.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1 ein Blockdiagramm des bevorzugten Ausführungsbeispiels,
- Figur 2 die Anordnung der Sensoren in einem Kraftfahrzeug des bevorzugten Ausführungsbeispiels,
- Figur 3 ein Ablaufdiagramm des Verfahrens des bevorzugten Ausführungsbeispiels.

### Beschreibung von Ausführungsbeispielen

Nachfolgend werden ein Verfahren, eine Vorrichtung und eine Verarbeitungseinheit zur Verbesserung der Sicht in einem Kraftfahrzeug beschrieben, wobei eine Strahlungsquelle des Kraftfahrzeuges einen Beleuchtungsbereich beleuchtet. Wenigstens ein Überwachungssensor des Kraftfahrzeuges überwacht die Umgebung des Kraftfahrzeuges auf die Anwesenheit von Objekten. Die Strahlungsquelle ist im bevorzugten Ausführungsbeispiel eine Lichtquelle, z.B. der Scheinwerfer eines Fahrzeugs.

Im bevorzugten Ausführungsbeispiel wird der Raum vor zwei NIR-Scheinwerfern eines Nachtsichtsystems durch Sensoren überwacht. Hierdurch werden Personen und andere Objekte, die sich vor den NIR-Scheinwerfern befinden, insbesondere Abstand zu den NIR-Scheinwerfern detektiert und bei Unterschreiten der Mindestentfernung die NIR-Scheinwerfer deaktiviert. Alternativ zu der Deaktivierung von beiden NIR-Scheinwerfern kann auch nur ein Scheinwerfer deaktiviert werden, so dass die Nachtsichtfunktion des Nachtsichtsystems zumindest in eingeschränktem Maße verfügbar bleibt.

Alternativ zur Deaktivierung wenigstens eines NIR-Scheinwerfers wird in einer Variante des bevorzugten Ausführungsbeispiels die Strahlungsintensität des NIR-Scheinwerfer reduziert, in einer bevorzugten Ausführung abstandsabhängig geregelt. Dies erfolgt in einer Ausführung derart, dass zumindest in einem Abstandswertebereich ein in etwa proportionaler Zusammenhang zwischen Abstand und Intensität besteht.

In einer Ausführung wird bei Abstandswerten zu dem Objekt unterhalb eines bestimmten Wertes (zw. Bei gefährlichen Grenzabständen, z.B. kleiner als 20cm) die Strahlungsquelle abgeschaltet.

In einer Ausführung ist eine Warnung (optisch, akustisch und/oder haptisch) des Fahrers und/oder des Objekts vorgesehen.

Im bevorzugten Ausführungsbeispiel werden abstandsmessende Sensoren eingesetzt, die bereits im Kraftfahrzeug vorhanden sind oder deren Verwendung zumindest im Kraftfahrzeug bekannt ist Dies sind beispielsweise Parkpilotsensoren (PP-Sensoren) auf Ultraschallbasis (Ultraschallsensoren), Long-Range-Radarsensoren mit 77 GHz und langer Reichweite wie sie für ACC (Adaptive Cruise Control) benutzt werden, Short-Range-Radar-Sensoren mit 24 GHz und kurzer Reichweite oder LIDAR-Sensoren.

In einer Ausführung wird nicht die Entfernung (Abstand zu dem Objekt) allein herangezogen, sondern aus dem Abstandssignal bzw. seiner Änderung eine Annäherung an ein Objekt erkannt. Bei erkannter Annäherung an das Objekt werden die obigen Maßnahmen einzeln oder in beliebiger Kombination ergriffen.

Die beschriebene Vorgehensweise eignet sich für alle sichtunterstützenden Systeme mit Strahlungsquellen außerhalb des sichtbaren Bereichs im Kfz-Bereich oder außerhalb davon, z.B. bei Messsystemen der Fertigungs- und Verfahrenstechnik. Insbesondere eignet sich die Vorgehensweise für Nachtsichtsysteme für Kraftfahrzeuge in Vorwärtsfahrrichtung als auch für solche in Rückwärtsfahrrichtung (Rückfahrkamera und Diodenrückleuchten).

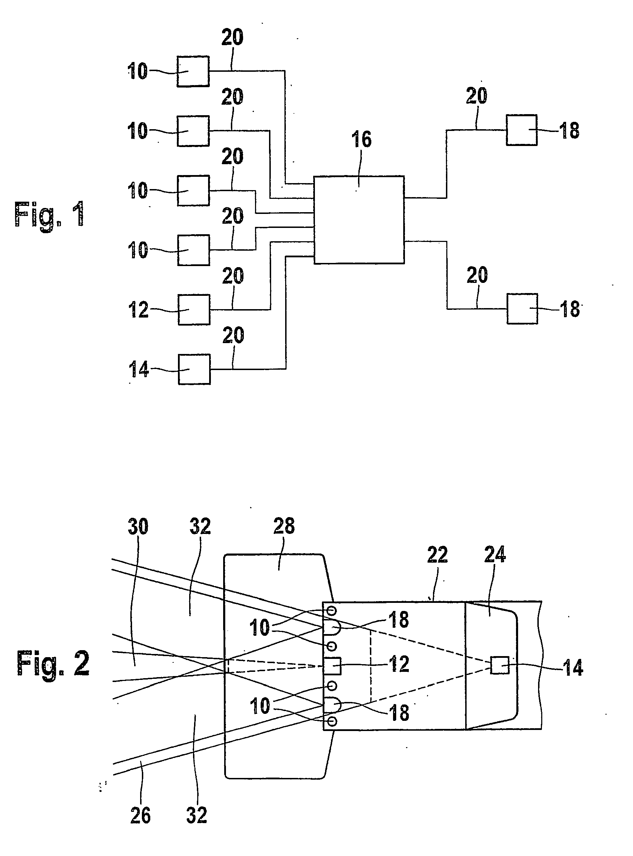

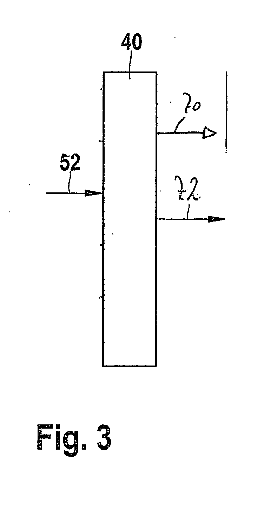

Figur 1 zeigt ein Blockdiagramm des bevorzugten Ausführungsbeispiels, bestehend aus Sensoren 10, 12, 14, einer Verarbeitungseinheit 16 und NIR-Scheinwerfern 18. Die Sensoren 10, 12, 14 sind, wie nachfolgend in Figur 2 erläutert, an einem Kraftfahrzeug angeordnet. Als Sensoren 10, 12, 14 werden im bevorzugten Ausführungsbeispiel vier Ultraschallsensoren 10 verwendet. Alternativ oder ergänzend ist ein Radarsensor 12 und/oder ein Videosensor 14 gezeigt. Die Sensoren 10 überwachen den Beleuchtungsbereich der NIR-Scheinwerfer 18 zumindest in seiner Breite vollständig. Im bevorzugten Ausführungsbeispiel sind der Videosensor 14 und die NIR-Scheinwerfer 18 Bestandteil eines Nachtsichtsystems, das durch eine Anzeigevorrichtung zur Darstellung von Informationen des Videosensors 14 ergänzt wird, die dem Fahrer angezeigt werden. Im bevorzugten Ausführungsbeispiel wird eine CMOS-Videokamera verwendet, wobei alternativ oder zusätzlich in einer Variante eine CCD-Videokamera eingesetzt wird. Für die Nachtsichtfunktion ist insbesondere derjenige Spektralbereich relevant, der oberhalb des sichtbaren Spektrums (380nm-780 nm) und innerhalb des Empfindlichkeitsbereichs von CCD- oder CMOS-Videokameras (etwa 350nm-1100nm, rückführbar auf die spektrale Empfindlichkeit von Silizium), also zwischen 780nm und 1100nm liegt. Für die Nachtsichtfunktion ist aufgrund des Empfindlichkeitsbereiches der Videokamera also insbesondere NIR IR-A relevant. Prinzipiell kann jede Strahlungsquelle genutzt werden, deren Spektralbereich mindestens den NIR IR-A-Bereich oder Teile davon beinhaltet. Als NIR-Scheinwerfer 18 werden im bevorzugten Ausführungsbeispiel Scheinwerfer mit Halogenglühlampen mit einer Farbtemperatur zwischen 3200 und 3400°K verwendet, deren Spektralbereich durch Interferenz- oder Absorptionsfilter auf den nahen Infrarotbereich zwischen ca. 780nm und ca. 1200nm eingeschränkt werden. In einer Variante des bevorzugten Ausführungsbeispiels werden als NIR-Scheinwerfer 18 Laserscheinwerfer verwendet. In einer weiteren Variante wird als NIR-Scheinwerfer 18 ein Array von Light-Emitting-Diodes (LEDs) eingesetzt, dies auch in Verbindung mit Rückleuchten des Fahrzeugs. Bei Anwesenheit eines oder mehrerer Objekte erzeugen die Sensoren Sensorsignale, die über Signalleitungen 20 an die Verarbeitungseinheit 16 übertragen werden. Die Verarbeitungseinheit 16 besteht aus mehreren, in Figur 3 dargestellten Funktionsmodulen 40, 42, 44, 46. Die Funktionsmodule 40, 42, 44, 46 sind als Programme und/oder Programmschritte wenigstens eines Mikroprozessors in der Verarbeitungseinheit 16 und/oder mittels programmierbarer Logik, insbesondere als ASIC und/oder FPGA, realisiert. Die Verarbeitungseinheit 16 erzeugt Einstellsignale der NIR-Scheinwerfer 18, die über Signalleitungen 20 übertragen werden, wobei die Strahlungsintensität und/oder die Funktion des Scheinwerfers geregelt und/oder gesteuert wird. Die Sensor- sowie die Steuerdaten werden über die Signalleitungen 20 elektrisch und/oder optisch und/oder per Funk übertragen, wobei die Signalleitungen 20 eine 1-Draht-Leitung und/oder eine 2-Draht-Leitung und/oder eine Mehrdraht-Leitung sind.

Insbesondere sind die Signalleitungen 20 alternativ oder zusätzlich als Busleitung, wie dem CAN-Bus oder die Signale mittels Power Line Communication de3n Versorgungsleitungen aufmodulieret, ausgeführt.

Figur 2 zeigt die Anordnung der Sensoren 10, 12, 14 und deren Überwachungsbereiche 26, 28, 30 im Vorfeld des Kraftfahrzeuges 22 des bevorzugten Ausführungsbeispiels. Dabei ist die Figur 2 eine Draufsicht auf das Kraftfahrzeug 22, dessen Fahrtrichtung in Bildrichtung links ist. Die beiden NIR-Scheinwerfer 18 sind im Bereich der Scheinwerfer für das Fern- und Abblendlicht und/oder im Bereich der Zusatzscheinwerfer und/oder im Bereich der Nebelscheinwerfer an der Vorderfront des Kraftfahrzeuges 22 derart angebracht, dass die Beleuchtungsbereiche 32 in Fahrtrichtung im wesentlichem dem Beleuchtungsbereich des Fernlichtes entsprechen. Ferner ist im Bereich des Kühlergrills und/oder der vorderen Stoßstange des Kraftfahrzeuges 22 der Radarsensor 12 angebracht. Alternativ oder zusätzlich zum Radarsensor 12 wird in einer Variante des bevorzugten Ausführungsbeispiels ein LIDAR-Sensor eingesetzt. Der Überwachungsbereich 30 des Radarsensors 12 und/oder des LIDAR-Sensors hat einen Öffnungswinkel von etwa 15° bis 20°. Der Überwachungsbereich 30 beginnt bei etwa 2 Meter vor dem Sensor. Alternativ oder zusätzlich werden in einer weiteren Variante abtastende (scannende) Radar- oder LIDAR-Prinzipien benutzt. Dabei erweitert sich der Überwachungsbereich 30 dieser beiden Sensortypen entsprechend um den Scanwinkel, der in Figur 2 nicht eingezeichnet ist. Der Videosensor 14 ist im bevorzugten Ausführungsbeispiel an der Innenseite der Windschutzscheibe 24 des Kraftfahrzeuges 22 angebracht. Neben der Überwachungsfunktion ist der Videosensor 14 Bestandteil des Nachtsichtsystems des Kraftfahrzeuges. Der Videosensor 14 ist im Innenraum des Kraftfahrzeuges 22 im Bereich des Innenrückspiegels montiert, wobei die optische Achse des Videosensors 14 zur Erfassung des Verkehrsraumes derart ausgerichtet ist, dass der Überwachungsbereich 26 des Videosensors 14 annähernd die Beleuchtungsbereiche 32 der NIR-Scheinwerfer 18 vor dem Kraftfahrzeug 22 in Fahrtrichtung abdeckt. Der Überwachungsbereich 26 des Videosensors 14 hat einen Öffnungswinkel in Fahrtrichtung von etwa 30° und ist damit auf den Öffnungswinkel der NIR-Scheinwerfer 18 abgestimmt, der ebenfalls etwa 30° beträgt. Der Tiefenschärfebereich und damit der Überwachungsbereich 26 des Videosensors 14 beginnt bei etwa 2 Meter vor dem Videosensor 14. Ferner ist in Figur 2 ein Cluster von vier Ultraschallsensoren 10, die symmetrisch verteilt über dem vorderen Stoßfänger des Kraftfahrzeuges 22 angeordnet sind, eingetragen. Die Ultraschallsensoren 10 werden in der Funktion als Parkpilot-Sensoren zur Unterstützung des Fahrers beim Einparken verwendet. Alternativ wird in einer Variante ein Cluster von sechs Ultraschallsensoren 10 eingesetzt. Der Überwachungsbereich 28 der Ultraschallsensoren 10 deckt in etwa einen Bereich zwischen zwei bis fünf Meter, vorzugsweise 2 Meter, um den vorderen Stoßfänger des Kraftfahrzeuges 22 in Fahrtrichtung ab. Der Cluster deckt dabei den kompletten Raum vor den NIR-Scheinwerfern 18 ab. Aus den eingezeichneten Überwachungsbereichen 28, 30, 32 der Sensoren 10, 12, 14 wird deutlich, dass die Bereiche unmittelbar vor den NIR-Scheinwerfern 18 im bevorzugten Ausführungsbeispiel von mindestens zwei Sensortypen, namentlich dem Cluster der Ultraschallsensoren 10 und dem Videosensor 14 erfasst werden. Dies trägt zu einer hohen Detektionssicherheit von Objekten bei.

Figur 3 zeigt ein Ablaufdiagramm des Verfahrens zur Verbesserung der Sicht in einem Kraftfahrzeug des bevorzugten Ausführungsbeispiels, bestehend aus Funktionsmodul 40. Diese Figur 3 verdeutlicht die Signalverarbeitungsstruktur für die Überwachung der NIR-Scheinwerfer. Die Ultraschallsensoren liefern Sensorsignale 52, vorzugsweise Abstandwerte zu den Objekten. Diese Daten 52 werden an das Funktionsmodul 40 übertragen. Dort wird der Abstandwert mit einem Schwellenwert verglichen. Unterschreitet der Abstandswert einen kritischen Grenzabstand (z.B. 20 cm), wird ein Steuersignal (70, 72) erzeugt, welches den oder die Schweinwerfer ausschaltet. Ist der Wert über dem Grenzwert, so wird anhand von wenigstens einem vorhergehenden Wert abgeleitet, ob man sich dem Objekt annähert, d.h. ob sich der Abstand verkürzt. Alternativ reicht das Überschreiten des Grenzwerts aus. Ist dies der Fall, wird ein Steuersignal für den oder die Scheinwerfer auf der Basis einer Regelung für die Strahlungsintensität des Scheinwerfers erzeugt. Vorzugsweise wird die Strahlungsintensität dann proportional zum Abstand zum Objekt eingestellt, wobei die Strahlungsintensität umso geringer ist, je näher das Objekt ist. Alternativ wird die Strahlungsintensität abhängig von der Annäherung geregelt, wobei auch hier in etwa Proportionalität angestrebt wird. Die Strahlungsintensität ist umso niedriger, je schneller die Annäherung stattfindet. Auch eine Kombination beider Lösungen ist Teil einer Ausführung.

Das beschriebene Verfahren und/oder die Vorrichtung sind nicht auf die Verwendung bei einem Nachtsichtsystem mit NIR-Scheinwerfern beschränkt. Vielmehr ist das Verfahren und/oder die Vorrichtung und/oder die Verarbeitungseinheit neben Nachtsichtfunktionen auch für andere automobile Funktionen, die mit Licht mit Wellenlängen außerhalb des sichtbaren Spektrums arbeiten verwendbar, beispielsweise bei der auf Infrarotlicht basierenden Kommunikation zwischen zwei Kraftfahrzeugen. Alternativ oder zusätzlich werden Strahlungsquelle n überwacht, die Licht mit Wellenlängen im Ultravioletten (UV) Spektralbereich emittieren.

In einer weiteren Variante wird das beschriebene Verfahren und/oder die Vorrichtung und/oder die Verarbeitungseinheit im Heckbereich des Kraftfahrzeuges angewendet, beispielsweise bei einer infrarotbasierten Rückfahrkamera und Diodenrückleuchten.

In einer weiteren Variante des bevorzugten Ausführungsbeispiels wird alternativ oder zusätzlich durch ein akustisches und/oder optisches Warnsignal das wenigstens eine anwesende Objekt gewarnt.

Der Fahrer kann über optische, akustische und/oder haptische Aktuatorik gewarnt werden.

## Patentansprüche

1. Verfahren zur Steuerung einer Strahlungsquelle, wobei wenigstens eine Strahlungsquelle einen Beleuchtungsbereich beleuchtet, wobei wenigstens ein Sensor wenigstens einen Teil des Beleuchtungsbereichs der Strahlungsquelle auf die Anwesenheit von wenigstens einem Objekt überwacht und in Abhängigkeit des wenigstens einen anwesenden Objekts Sensorsignale erzeugt, wobei die Strahlungsquelle in Abhängigkeit der Sensorsignale abgeschaltet und/oder in ihrer Strahlungsintensität verringert wird, **dadurch gekennzeichnet, dass** die Strahlungsquelle deaktiviert wird, denn der Abstand zu dem erkannten Objekt einen Grenzwert unterschreitet, und/oder dass aus dem Sensorsignal die Annäherung an ein Objekt ermittelt wird und die Abschaltung bzw. Regelung der Strahlungsquelle abhängig von der Annäherung an das Objekt erfolgt.

2. Verfahren nach Anspruch 1, **dadurch gekennzeichnet, dass** die Strahlungsquelle ein zumindest im nahen infraroten Wellenlängenbereich leuchtender Scheinwerfer ist.

3. Verfahren nach einem der vorhergehenden Ansprüche, **dadurch gekennzeichnet, dass** wenigstens ein Ultraschallsensor und/oder wenigstens ein Radarsensor, der vorzugsweise im Wellenlängenbereich 24 GHz und/oder 77 GHz arbeitet, und/oder wenigstens ein LLDAR-Sensor und/oder wenigstens ein Videosensor die Sensorsignale erzeugt.

4. Verfahren nach einem der vorhergehenden Ansprüche, **dadurch gekennzeichnet, dass** die Strahlungsintensität der Strahlungsquelle in Abhängigkeit der Sensorsignale geregelt wird.

5. Verfahren nach Anspruch 4, **dadurch gekennzeichnet, dass** die Intensität in etwa proportional zur Annäherung an ein Objekt und/oder zur Entfernung zu einem Objekt ist.

6. Verfahren nach einem der vorhergehenden Ansprüche, **dadurch gekennzeichnet, dass** durch ein akustisches und/oder optisches Warnsignal das wenigstens eine anwesende Objekt gewarnt wird.

7. Vorrichtung zur Steuerung einer Strahlungsquelle, wobei die Strahlungsquelle einen Beleuchtungsbereich beleuchtet, mit wenigstens einem Sensor, der derart konfiguriert ist, dass der Sensor wenigstens einen Teil des Beleuchtungsbereichs der Strahlungsquelle auf die Anwesenheit wenigstens eines Objekts überwacht, wobei der Sensor in Abhängigkeit des wenigstens einen anwesenden Objekts Sensorsignale erzeugt, mit wenigstens einer Verarbeitungseinheit, die in Abhängigkeit der Sensorsignale die Strahlungsquelle abschaltet und/oder in ihrer Strahlungsintensität verringert, **dadurch gekennzeichnet, dass** die Verarbeitungseinheit derart ausgestaltet ist, dass die Strahlungsquelle deaktiviert wird, wenn der Abstand zu dem erkannten Objekt einen Grenzwert unterschreitet, und/oder die Verarbeitungseinheit derart ausgestaltet ist, dass aus dem Sensorsignal die Annäherung an ein Objekt ermittelt wird und die Abschaltung bzw. Regelung der Strahlungsquelle abhängig von der Annäherung an das Objekt erfolgt.

8. Verwendung der Vorrichtung nach Anspruch 7 in einem System, insbesondere einem Nachtsichtsystem in einem Kraftfahrzeug.

## Claims

1. Method for controlling a radiation source, in which at least one radiation source illuminates an illuminated area, in which at least one sensor monitors at least a part of the illuminated area of the radiation source for the presence of at least one object and produces sensor signals as a function of the at least one object that is present, in which the radiation source is switched off as a function of the sensor signals and/or its radiation intensity is reduced, **characterized in that** the radiation source is deactivated when the distance to the identified object is less than a limit value, and/or **in that** the approach to an object is determined from the sensor signal and the radiation source is switched off or regulated as a function of the approach to the object.

2. Method according to Claim 1, **characterized in that** the radiation source is a headlight which provides illumination at least in the near infrared wavelength range.

3. Method according to one of the preceding claims, **characterized in that** at least one ultrasound sensor and/or at least one radar sensor which preferably operates in the wavelength range of 24 GHz and/or 77 GHz, and/or at least one LIDAR sensor and/or at least one video sensor produces the sensor signals.

4. Method according to one of the preceding claims, **characterized in that** the radiation intensity of the radiation source is regulated as a function of the sensor signals.

5. Method according to Claim 4, **characterized in that** the intensity is approximately proportional to the approach to an object and/or to the distance from an object.

6. Method according to one of the preceding claims, **characterized in that** the at least one object that is present is warned by means of an audible and/or visual warning signal.

7. Apparatus for controlling a radiation source, in which the radiation source illuminates an illuminated area, having at least one sensor which is configured such that the sensor monitors at least a part of the illuminated area of the radiation source for the presence of at least one object, in which the sensor produces sensor signals as a function of the at least one object that is present, having at least one processing unit which switches off the radiation source as a function of the sensor signals and/or reduces its radiation intensity, **characterized in that** the processing unit is designed such that the radiation source is deactivated when the distance to the identified object is less than a limit value, and/or the processing unit is designed such that the approach to an object is determined from the sensor signal, and/or the radiation source is switched off or regulated as a function of the approach to the object.

8. Use of the apparatus according to Claim 7 in a system, in particular in a night-vision system in a motor vehicle.

## Revendications

1. Procédé de commande d'une source de rayonnement selon lequel, au moins une source de rayonnement éclaire une zone d'éclairage,
au moins un capteur surveille au moins une partie de la zone d'éclairage de la source de rayonnement quant à la présence d'au moins un objet et en fonction de la présence d'au moins un objet, elle génère des signaux de capteur,
et la source de rayonnement est coupée et/ou réduite d'intensité, en fonction des signaux du capteur,
**caractérisé en ce que**
la source de rayonnement est neutralisée si la distance par rapport à l'objet détecté passe en dessous d'une valeur limite et/ou si à partir du signal de capteur on détermine un rapprochement par rapport à l'objet et la coupure ou la régulation de la source de rayonnement se fait en fonction du rapprochement par rapport à l'objet.

2. Procédé selon la revendication 1,
**caractérisé en ce que**
la source de rayonnement est un projecteur éclairant dans au moins la plage des longueurs d'ondes du proche infrarouge.

3. Procédé selon l'une des revendications précédentes,
**caractérisé en ce qu'**
au moins un capteur d'ultrasons et/ou au moins un capteur radar travaillant de préférence dans la plage des longueurs d'ondes de 24 GHz et/ou 77 GHz et/ou au moins un capteur LIDAR et/ou au moins un capteur vidéo génèrent les signaux de capteur.

4. Procédé selon l'une des revendications précédentes,
**caractérisé en ce que**
l'intensité du rayonnement de la source de rayonnement est régulée en fonction des signaux du capteur.

5. Procédé selon la revendication 4,
**caractérisé en ce que**
l'intensité est sensiblement proportionnelle au rapprochement et/ou à l'éloignement de l'objet.

6. Procédé selon l'une des revendications précédentes,
**caractérisé en ce qu'**
un signal avertisseur acoustique et/ou optique informe de la présence d'au moins un objet.

7. Dispositif de commande d'une source de rayonnement selon lequel la source de rayonnement éclaire une zone d'éclairage avec au moins un capteur configuré pour surveiller au moins une partie de la plage d'éclairage de la source de rayonnement quant à la présence d'au moins un objet,
le capteur générant des signaux de capteur en fonction de la présence d'au moins un objet,
au moins une unité de traitement qui, en fonction des signaux de capteur, coupe et/ ou réduit l'intensité de la source d'éclairage,
**caractérisé en ce que**
l'unité de traitement neutralise la source de rayonnement si la distance par rapport à l'objet reconnu, passe en dessous d'une valeur limite et/ou l'unité de traitement est conçue pour qu'à partir du signal de capteur elle détermine le rapprochement d'un objet et coupe ou régule la source de rayonnement en fonction du rapprochement de l'objet.

8. Application du dispositif selon la revendication 7 à un système notamment à un système de vision nocturne dans un véhicule automobile.
